# EUROPEAN PATENT APPLICATION

(11) **EP 2 319 295 A1**
(43) Date of publication of application: **11.05.2011**
(21) Application number: 10155425.1
(22) Date of filing: 04.03.2010
(51) Int. Cl.: A01G 3/025

(54) **Long reach pruner**

(30) Priority: 06.11.2009 TW 098220606
(71) Applicant: Natura Innovation Ltd., Taipei 104 (TW)
(72) Inventor: Shan, Su-Hua, 104, Taipei (TW)
(74) Representative: Dossmann, Gérard

(57) **Abstract**

The present invention discloses a long reach pruner using movements and engagements of a blade unit, a first connection device, a second connection device, and an adjust device to adjust the swing range of the blade unit. The adjust device has a rotation element connected to a first press-fit element having a male thread on the surface thereof. When the rotation element is rotated downward, the male thread is driven to screw into a female thread of the first connection device and then fixed there; meanwhile, ratchet teeth of the first connection device engage with a ratchet of the second connection device. When the rotation element is rotated upward, the male thread is driven to screw out from the female thread and then fixed there; meanwhile, the ratchet teeth is separated from the ratchet. Thereby, the swing angle of the blade unit is adjusted and then fixed.

## Description

The present invention relates to a long reach pruner, particularly to a long reach pruner, wherein a rotation element adjusts the swing range of the blades of the long reach pruner via a screw and ratchet mechanism.

A long reach pruner is often used to trim a higher plant. The long rod thereof enables the user to trim a higher branch standing on the ground and exempts the user from climbing high. However, the swing angle of the blades of the conventional long reach pruner is unlikely to adjust. In such a case, the user is hard to trim a branch or harvest a fruit, which grows at a special position.

A long reach pruner has a pair of blades and an operating mechanism respectively arranged on two ends of an extended rod. Therefore, a long reach pruner needs a link mechanism to actuate the blades. The actuation is usually realized by a rope-driving mechanism, such as the "Easy-to-Operate Long Reach Pruner Structure" disclosed in a Taiwan patent No.513910. In the prior art, the ropes are arranged on the external of the rod and likely to be tangled or even torn by branches.

Accordingly, the present invention proposes a long reach pruner to overcome the conventional problems.

The primary objective of the present invention is to provide a long reach pruner, which uses the engagement of a screw and ratchet mechanism to improve the stability of the swing of the blades and uses a simple rotation movement to adjust the swing angle of the blades.

Another objective of the present invention is to provide a long reach pruner, wherein the ropes are arranged inside the rod, whereby is overcome the conventional problem that the ropes are likely to be tangled or torn by branches.

To achieve the abovementioned objectives, the present invention proposes a long reach pruner, which comprises a blade unit, a first connection device, a second connection device, an adjust device, and a rod. The upper end of the first connection device is connected to the blade unit, and the lower end of the first connection device has a first positioning ring and a second positioning ring. The inner rim of one side of the first positioning ring has a female thread. The inner rim of the other side of the first positioning ring has a set of ratchet teeth. One end of the second connection device is interposed between the first positioning ring and the second positioning ring; the other end of the second connection device is connected to the rod. The second connection device includes a first positioning block and a second positioning block. The first positioning block has a ratchet annularly arranged around the inner rim thereof and corresponding to the ratchet teeth of the first positioning ring. The second positioning block is corresponding to the second positioning ring. The adjust device has a rotation element connected to a first press-fit element, and the first press-fit element has a male thread on the surface thereof. When the rotation element is rotated, the male thread is driven to screw into or screw out from the female thread of the first positioning ring and then fixed there; meanwhile, the ratchet teeth of the first positioning ring are engaged to or detached from the ratchet of the first positioning block. Thereby, the swing angle of the blade unit is adjusted and then fixed.

Below, the embodiments are described in detail to make easily understood the objectives, technical contents, characteristics and accomplishments of the present invention.
- Fig.1: is a perspective view of a long reach pruner according to a first embodiment of the present invention;
- Fig.2: is a perspective exploded view of a long reach pruner according to the first embodiment of the present invention;
- Fig.3: is a sectional view schematically showing an adjust device is rotated upward according to the first embodiment of the present invention;
- Fig.4: is a perspective view schematically showing the adjust device is rotated downward according to the first embodiment of the present invention;
- Fig. 5: is a sectional view schematically showing the adjust device is rotated downward according to the first embodiment of the present invention;
- Fig.6: is a perspective view schematically showing a long reach pruner according to a second embodiment of the present invention; and
- Fig.7: is a side view schematically showing a long reach pruner according to the second embodiment of the present invention.

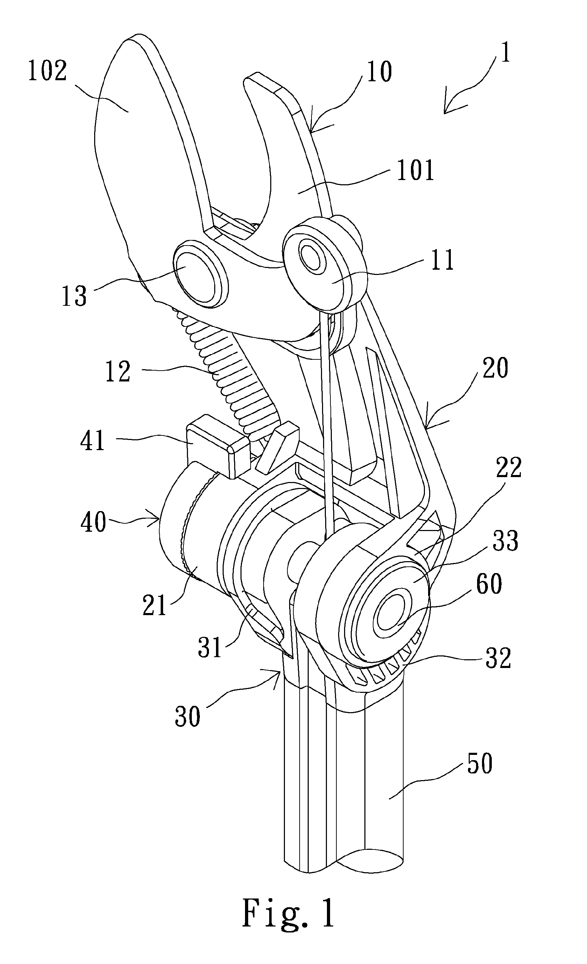

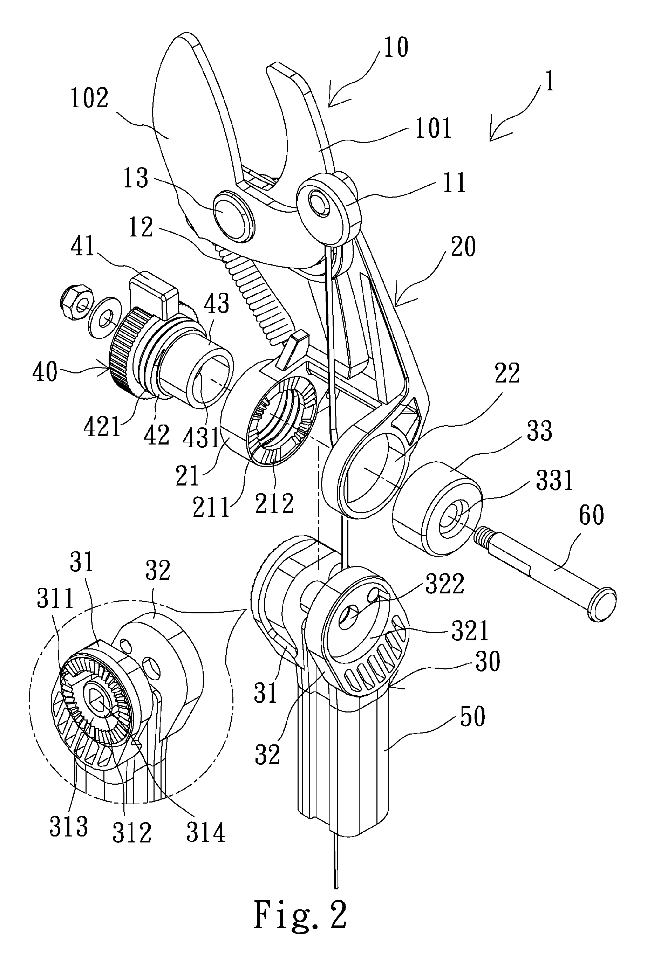

Refer to Fig.1 and Fig.2 respectively a perspective view and a perspective exploded view of a long reach pruner according to the present invention. The long reach pruner of the present invention comprises a blade unit 10, a first connection device 20, a second connection device 30, an adjust device 40, and a rod 50. The blade unit 10 includes a static blade 101 and a movable blade 102. One end of the movable blade 102 has a movement element 11, and the other end of the movable blade 102 is connected to the first connection device 20 via an elastic element 12. Above the first connection device 20, the static blade 101 and the movable blade 102 are pivotally coupled with a pivotal coupling element 13. The first connection device 20 has a first positioning ring 21 and a second positioning ring 22 in the lower part thereof. The inner rim of one side of the first positioning ring 21 has a female thread 211. The inner rim of the other side of the first positioning ring 21 has a set of ratchet teeth 212. The second connection device 30 includes a first positioning block 31 and a second positioning block 32 interposed between and respectively corresponding to the first and second position rings 21 and 22 of the first connection device 20. The lower end of the second connection device 30 is connected to a rod 50. The first positioning block 31 has a ratchet 311 annularly arranged around the inner rim thereof and corresponding to the ratchet teeth 212 of the first positioning ring 21. The first positioning block 31 has a press-fit block 312 protruding from the center thereof, and an annular trench 313 is thus formed between the press-fit block 312 and the ratchet 311. The press-fit block 312 has a first pivotal hole 314. The second positioning block 32 is corresponding to the second positioning ring 22. The second positioning block 32 has a positioning trench 321. A second pivotal hole 322 is formed at the center of the positioning trench 321 and corresponding to the first pivotal hole 314. A second press-fit element 33 is inserted through the second positioning ring 22 and arranged in the positioning trench 321 of the second positioning block 32. The second press-fit element 33 has a fourth pivotal hole 331 corresponding to the second pivotal hole 322. The adjust device 40 has a rotation element 41 connected to a first press-fit element 42, and the first press-fit element 42 has a male thread 421 on the surface thereof. A pipe 43 extends from the first press-fit element 42 and has a third pivotal hole 431 at the center thereof. The pipe 43 is inserted through the first positioning ring 21 and sleeved by the annular trench 313 of the first positioning block 31 with the third pivotal hole 431 corresponding to the first pivotal hole 314. Then, a pivotal element 60 sequentially passes through the fourth pivotal hole 331, second pivotal hole 322, first pivotal hole 314 and third pivotal hole 431 to pivotally couple the parts. Via the press-fit design, the stability of the swing of the blades is improved. Thereby, the blades will not loosen in use. Further, the swing angle is adjustable in the present invention.

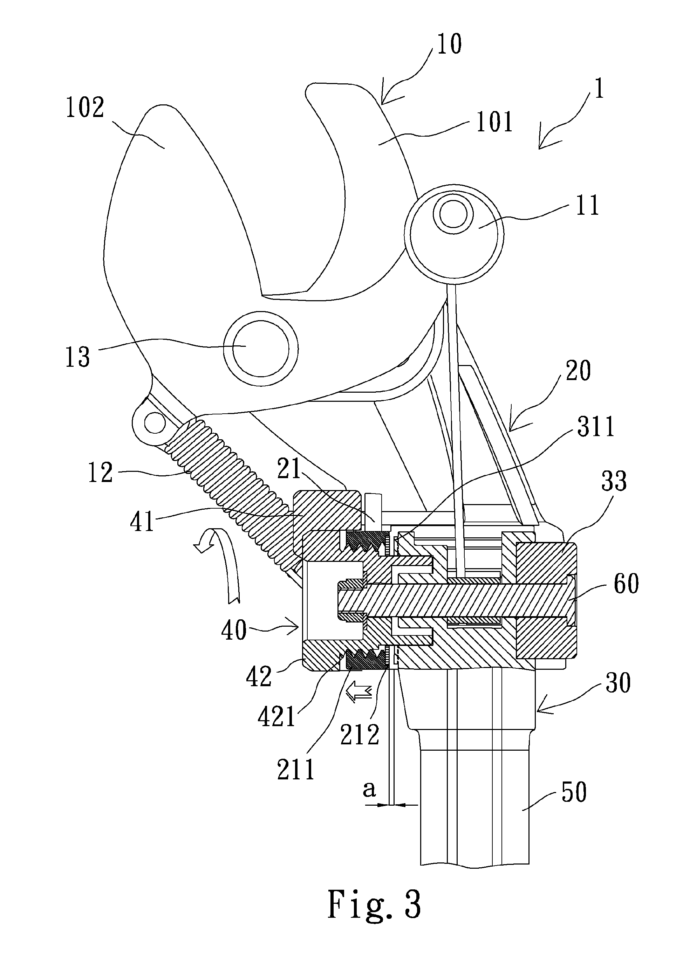

Refer to Fig.3 a sectional view schematically showing the process of adjusting the swing range of the blade unit 10 according to the present invention. The rotation element 41 of the adjust device 40 is rotated upward to drive the male thread 421 of the first press-fit element 42 to screw out from the female thread 211 of the first positioning ring 21, and the male thread 421 is then fixed there. Thus, the first connection device 20 is moved leftward by a travel of a. At the same time, the ratchet teeth 212 of the first positioning ring 21 is separated from the ratchet 311 of the first positioning block 31 by a spacing of a to achieve a state of detachment. Then, the user can adjust the swing angle of the blade unit 10.

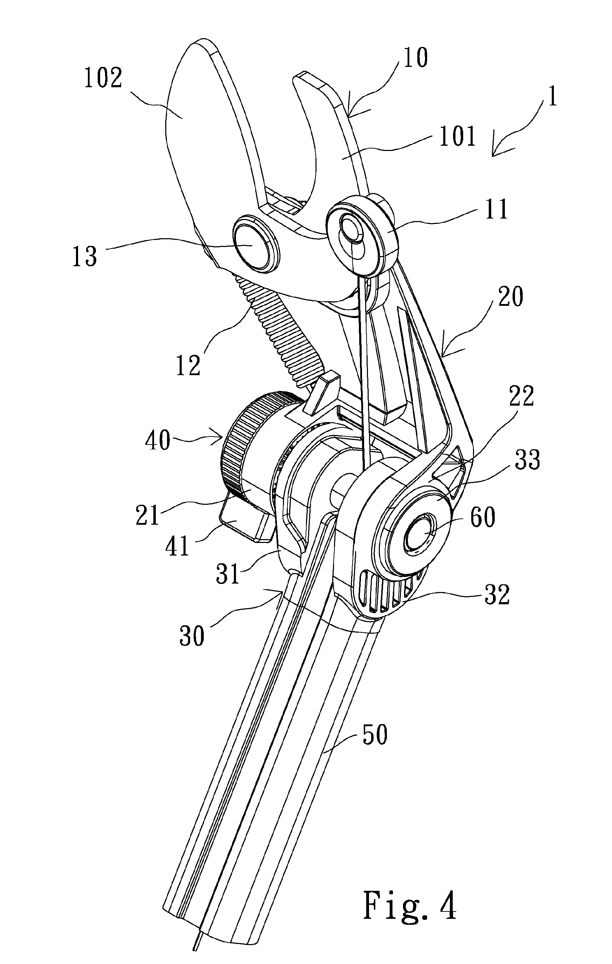

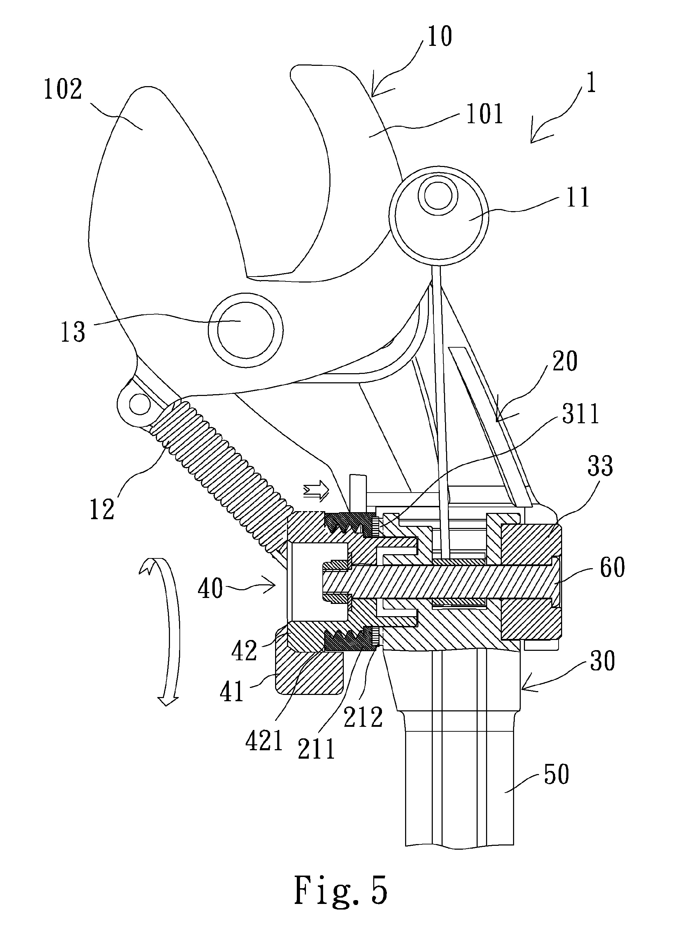

Refer to Fig.4 and Fig. 5. When the adjustment of the swing angle is completed, the user rotates the rotation element 41 of the adjust device 40 downward to drive the male thread 421 of the first press-fit element 42 to screw into the female thread 211 of the first positioning ring 21, and the male thread 421 is then fixed there. Thus, the first connection device 20 is moved rightward. At the same time, the ratchet teeth 212 of the first positioning ring 21 engage with the ratchet 311 of the first positioning block 31. Thereby is fixed the swing angle of the blade unit 10. From the above description, it is known that the user can easy and fast adjust the swing angle of the blade unit 10 via merely operating the rotation element 41 of the adjust device 40. Further, the blade unit 10 can be collapsed downward and collected safely via operating the rotation element 41 of the adjust device 40.

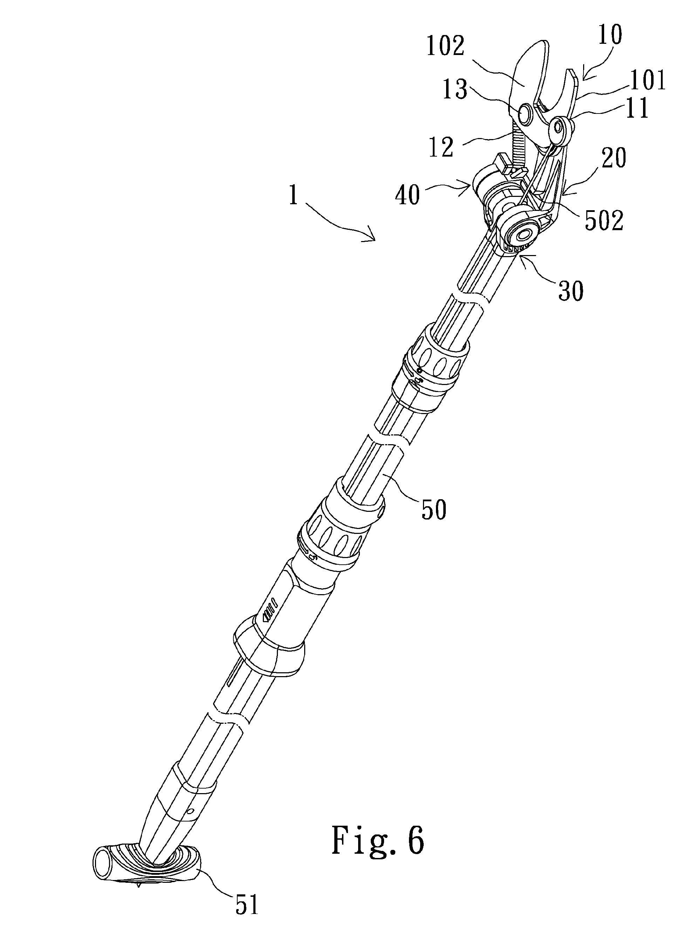

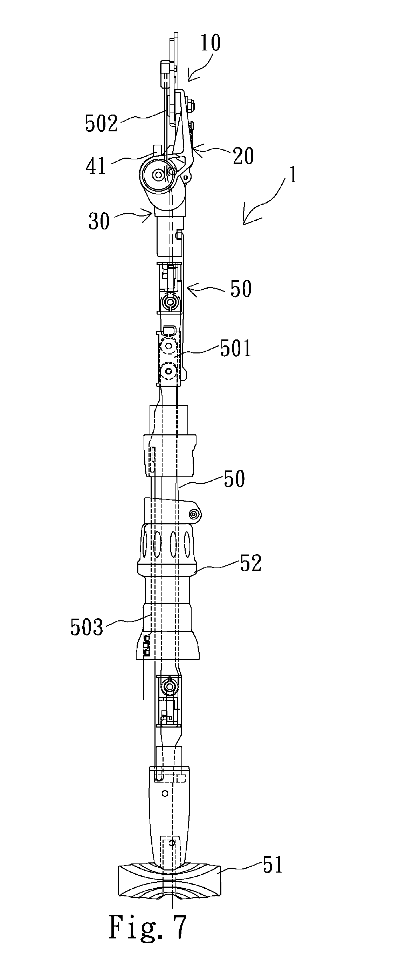

Refer to Fig.6 and Fig.7. The rod 50 has a plurality of pulley elements 501, an actuating rope 502, and a control rope 503 thereinside. Some of the pulley elements 501 are wound by the actuating rope 502 and control rope 503. The lower end of the rod 50 is connected with a movable pull handle 51 and a movable hold handle 52. One end of the actuating rope 502 is connected to the movement element 11 of the movable blade 102. The other end of the actuating rope 502 is connected to the movable pull handle 51 and the movable hold handle 52. According to requirement, the user operates the movable pull handle 51 or movable hold handle 52 to drive the actuating rope 502 to control the movement element 11 and the movable blade 102. The control rope 503 is used to extend the length of the rod 50, and the elastic element 12 is used to restore the length of the rod 50, whereby the long reach pruner can have an appropriate length to trim branches. In the present invention, the pulley elements 501, actuating rope 502 and control rope 503 are all arranged inside the rod 50. Therefore, the present invention can overcome the conventional problem that the ropes are arranged outside the rod and tangled/torn by branches.

The embodiments described above are only to exemplify the present invention but not to limit the scope of the present invention. Any equivalent modification or variation according to the spirit or characteristic of the present invention is to be also included within the scope of the present invention.

## Claims

1. A long reach pruner comprising
a blade unit;
a first connection device joined to said blade unit in an upper part thereof and having a first positioning ring and a second positioning ring in a lower part thereof, wherein an inner rim of one side of said first positioning ring has a female thread, and wherein an inner rim of another side of said first positioning ring has a set of ratchet teeth;
a second connection device including a first positioning block and a second positioning block, wherein one end of said second connection device is interposed between said first position ring and said second position ring, and wherein another end of said second connection device is connected to a rod, and wherein said first positioning block has a ratchet annularly arranged around an inner rim thereof and corresponding to said ratchet teeth of said first positioning ring, and wherein said second positioning block is corresponding to said second positioning ring; and
an adjust device having a rotation element connected to a first press-fit element, wherein said first press-fit element has a male thread on a surface thereof, and wherein said rotation element is rotated to drive said male thread into said female thread of said first positioning ring, and said male thread is then fixed in said female thread.

2. The long reach pruner according to claim 1, wherein said first positioning block has a press-fit block protruding from a center thereof, and wherein an annular trench is formed between said press-fit block and said ratchet, and wherein said press-fit block has a first pivotal hole, and wherein said second positioning block has a second pivotal hole corresponding to said first pivotal hole.

3. The long reach pruner according to claim 2, wherein a pipe extends from said first press-fit element and has a third pivotal hole at a center thereof, and wherein said pipe is inserted through said first positioning ring and sleeved by said annular trench of said first positioning block, and wherein said third pivotal hole is corresponding to said first pivotal hole and said second pivotal hole.

4. The long reach pruner according to claim 3 further comprising a second press-fit element, which is inserted through said second positioning ring and arranged in said second positioning block, wherein said second press-fit element has a fourth pivotal hole, and wherein a pivotal element is inserted through said first pivotal hole, said second pivotal hole, said third pivotal hole, and said fourth pivotal hole to form a pivotal coupling.

5. The long reach pruner according to claim 1, wherein said rotation element of said adjust device is rotated downward to drive said male thread of said first press-fit element to screw into said female thread of said first positioning ring, and said male thread is then fixed there; meanwhile, said ratchet teeth of said first positioning ring engage with said ratchet of said first positioning block to fix a swing angle of said blade unit.

6. The long reach pruner according to claim 1, wherein said rotation element of said adjust device is rotated upward to drive said male thread of said first press-fit element to screw out from said female thread of said first positioning ring, and said male thread is then fixed there; meanwhile, said ratchet teeth of said first positioning ring is separated from said ratchet of said first positioning block to adjust a swing angle of said blade unit.

7. The long reach pruner according to claim 1, wherein said blade unit includes a static blade and a movable blade; one end of said movable blade has a movement element, and another end of said movable blade is connected to said first connection device via an elastic element.

8. The long reach pruner according to claim 7, wherein said rod has a plurality of pulley elements, an actuating rope, and a control rope; said pulley elements are wound by said actuating rope and said control rope; one lower end of said rod is connected with a movable hold handle; two ends of said actuating rope are respectively connected to said movement element and said movable hold handle; said movable hold handle is operated to drive said actuating rope to actuate said movement element to control said movable blade; said control rope is used to extend length of said rod, and said elastic element is used to restore length of said rod.
